# EUROPÄISCHE PATENTSCHRIFT

(11) **EP 3 308 100 B1**
(45) Veröffentlichungstag und Bekanntmachung des Hinweises auf die Patenterteilung: **17.10.2018**
(21) Anmeldenummer: 16728990.9
(22) Anmeldetag: 15.06.2016
(51) Int. Cl.: G01B 21/04, G01B 5/008

(54) **KOORDINATENMESSGERÄT MIT EINER BEWEGLICHEN TRAVERSE SOWIE VERFAHREN ZUM HERSTELLEN EINES DERARTIGEN KOORDINATENMESSGERÄTS**
COORDINATE MEASURING MACHINE COMPRISING A MOVABLE CROSS BEAM, AND METHOD FOR PRODUCING SUCH A COORDINATE MEASURING MACHINE
APPAREIL DE MESURE DE COORDONNÉES COMPRENANT UNE TRAVERSE MOBILE ET PROCÉDÉ SERVANT À LA FABRICATION D'UN APPAREIL DE MESURE DE COORDONNÉES DE CE TYPE

(30) Priorität: 15.06.2015 DE 102015210914
(43) Veröffentlichungstag der Anmeldung: 18.04.2018
(73) Patentinhaber: Carl Zeiss Industrielle Messtechnik GmbH, 73447 Oberkochen (DE)
(72) Erfinder: MATZKOVITS, Berthold, 89547 Gerstetten (DE)
(74) Vertreter: Patentanwälte Bressel und Partner mbB
(86) Internationale Anmeldenummer: PCT/EP2016/063751
(87) Internationale Veröffentlichungsnummer: WO 2016/202856

(56) Entgegenhaltungen:
- EP-A1- 0 523 023
- EP-A1- 2 219 010
- WO-A1-91/00493

## Beschreibung

Die Erfindung betrifft ein Koordinatenmessgerät mit einer beweglichen Traverse, an der ein weiteres bewegliches Teil (z. B. eine Pinole) des Koordinatenmessgeräts beweglich geführt ist. An dem weiteren beweglichen Teil ist ein Messsensor zum Messen von Koordinaten eines Werkstücks befestigt oder befestigbar, z.B. über eine Sensorhalterung. Die Traverse ist über eine erste Abstützung und eine von der ersten Abstützung beabstandete zweite Abstützung an einer Basis des Koordinatenmessgeräts abgestützt. Beispiele für Koordinatenmessgeräte mit solchen Abstützungen sind Koordinatenmessgeräte in Portal-Bauweise und Gantry-Bauweise, wobei insbesondere auch Mischformen dieser beiden Bauweisen vorkommen. In all diesen Fällen ist die Traverse relativ zu der Basis (z.B. ein Messtisch, auf dem das zu messende Werkstück angeordnet wird) in einer linearen Bewegungsrichtung geradlinig beweglich. Üblicherweise weist die Basis entsprechende geradlinige lineare Bewegungsführungen auf, entlang denen jeweils eine der Abstützungen beweglich geführt ist. Die Richtung dieser geradlinigen Bewegung wird üblicherweise als y-Richtung bezeichnet. Die Erfindung betrifft ferner ein Verfahren zum Herstellen eines derartigen Koordinatenmessgeräts. Zum Umfang der Erfindung gehört auch ein Verfahren zum Betreiben eines derartigen Koordinatenmessgeräts.

Der Messsensor (z. B. ein Messkopf) weist z.B. eine Sensorik auf, die Messsignale erzeugt, durch deren Auswertung die Koordinaten ermittelt werden können. In der Koordinatenmesstechnik kommen jedoch auch andere Sensoren vor. Zum Beispiel kann der Sensor lediglich die Messung der Koordinaten auslösen. Dies ist zum Beispiel bei einem schaltenden Messkopf der Fall, der bei Kontakt mit dem zu vermessenden Werkstück ein Schaltsignal erzeugt, welches die Messung der Koordinaten z. B. durch Ablesung der Maßstäbe des oder der beweglichen Teile des KMG auslöst. Grundsätzlich können die Sensoren in durch Berührung (taktile Antastung des Werkstücks) und in nicht durch Berührung vermessende Sensoren eingeteilt werden. Zum Beispiel optische oder kapazitive Sensoren zur Koordinatenmessung sind Sensoren, die nicht auf dem Prinzip der taktilen Abtastung basieren. Auch ist es möglich, Sensoren nach der Art oder Größe des insbesondere gleichzeitig erfassten Bereichs des Werkstücks einzuteilen. Insbesondere können Sensoren Koordinaten lediglich eines Punktes oder einer Fläche an der Oberfläche oder auch im Inneren des Werkstücks messen oder Koordinaten eines Volumens des Werkstücks messen.

Ein Koordinatenmessgerät weist häufig eine Auswertungseinrichtung auf, die von dem Messsensor und/oder mittels des Messsensors erzeugte Messsignale auswertet und daraus Koordinaten eines mittels des Messsensors vermessenden Werkstücks ermittelt.

Die Bewegung der Traverse in der linearen Bewegungsrichtung ist üblicherweise maschinell angetrieben. Es ist jedoch auch möglich, dass eine Bedienperson die Traverse antreibt, z. B. indem die erste Abstützung manuell bewegt wird.

WO 2011/089222 A1 beschreibt ein Koordinatenmessgerät mit einem verfahrbaren Arbeitskopf, der am unteren freien Ende einer vertikal angeordneten Pinole befestigt ist. Die Pinole ist verfahrbar, sodass der Messkopf senkrecht zu einem Messtisch verfahren werden kann. Der Messtisch dient zur Aufnahme eines Messobjekts. Die Pinole ist ihrerseits an einem Querträger (d.h. einer Traverse) eines Portals angeordnet und sie kann an dem Querträger in einer ersten Horizontalrichtung mittels eines Schlittens verfahren werden. Das Portal kann zusammen mit der Pinole in einer zweiten Horizontalrichtung verfahren werden, sodass der Messkopf insgesamt in drei zueinander senkrechten Raumrichtungen verfahren werden kann. Um mechanische Reibung zwischen dem Messtisch, dem Portal, dem Schlitten und der Pinole zu vermeiden, sind zwischen jeweils zwei der Bauteile Luftlager vorgesehen, die von einer Druckluftzuführung mit einem Druckluftstrom versorgt werden.

Ein Koordinatenmessgerät (im Folgenden kurz: KMG) mit Traverse und zwei Abstützungen der Traverse wird häufig so ausgeführt, dass ein motorischer Antrieb lediglich die erste Abstützung antreibt, um die Traverse relativ zu der Basis in der linearen Bewegungsrichtung zu bewegen. Die erste Abstützung, die im Fall eines KMG in Portal-Bauweise als Säule bezeichnet werden kann, wird daher mechanisch stabiler ausgeführt als die zweite Abstützung (im Fall eines Portal-KMG ebenfalls eine Säule). Die zweite Abstützung wird lediglich indirekt angetrieben, nämlich durch den Antrieb der ersten Abstützung über die Traverse. Die aufgrund des Antriebs auf die Traverse wirkenden Kräfte und Momente werden daher über die mechanisch stabilere erste Abstützung übertragen. Die zweite Abstützung dient jedoch ebenso wie die erste Abstützung der Ableitung der Gewichtskräfte von der Traverse auf die Basis. Bei einer Beschleunigung der Bewegung der Traverse wirken außerdem Kräfte und Momente auf die Traverse auch aufgrund der Masse der zweiten Abstützung. Bei nicht direkt angetriebener zweiter Abstützung ist es daher von Vorteil, die zweite Abstützung mit geringer Masse auszuführen, im Fall eines Portal-KMG z.B. als Rohr aus faserverstärktem Kunststoff.

Die Bewegungen sowohl der ersten Abstützung als auch der zweiten Abstützung relativ zur Basis sind jeweils durch ein Bewegungslager gelagert. Bei den Bewegungen wirken daher Kräfte zwischen der Basis und der jeweiligen Abstützung. Wenn die zweite Abstützung nicht direkt angetrieben ist, wirken aufgrund der Bewegungslagerung über die zweite Abstützung Kräfte und Momente auf die Traverse, die bei direktem Antrieb der zweiten Abstützung zu einer asymmetrischen Beaufschlagung der Traverse führen. Im Fall eines Luftlagers ist der Effekt dieser asymmetrisch wirkenden Kräfte und Momente auf die Traverse sehr gering und in vielen Fällen vernachlässigbar klein. Wenn die erste Abstützung direkt angetrieben ist, bewegt sich die zweite Abstützung in diesem Fall sehr leichtgängig mit und die Traverse ist aufgrund der Luftlagerung keinen wesentlichen Drehmomenten um eine parallel zu den Längsachsen der Abstützungen verlaufenden Drehachse ausgesetzt.

Der Herstellungs- und Betriebsaufwand für eine Luftlagerung ist jedoch im Vergleich zu anderen Arten von Lagern (insbesondere anderen Gleitlagern oder Wälzlagern) hoch. Es besteht daher häufig der Wunsch, auf eine Luftlagerung zu verzichten und stattdessen die Bewegungslager der Abstützungen als Wälzlager auszuführen. Im Vergleich zu einer Luftlagerung wirken in diesem Fall jedoch höhere Lagerkräfte bei den Bewegungen der Abstützungen relativ zur Basis. Die Stärke der Kräfte und der daraus resultierenden Momente hängt außerdem von Einflussfaktoren wie der Temperatur und der Menge und dem Alter verwendeter Schmierstoffe in dem Lager ab. Wenn die zweite Abstützung nicht direkt angetrieben ist, führt dies zu zeitlich veränderlichen asymmetrisch auf die Traverse wirkenden Kräften und Momenten. Außer den bereits erwähnten Drehmomenten um eine parallel zu den Längsachsen der Abstützungen verlaufende Drehachse können insbesondere auch Drehmomente um eine parallel zur Längsachse der Traverse verlaufende Drehachse auftreten. Grundsätzlich können Drehmomente um beliebig orientierte Drehachsen auf die Traverse wirken. Da die Traverse beim Betrieb des KMG den Messsensor oder die Messsensoren trägt, müssen diese Drehmomente, die auch impulsartig und wiederkehrend impulsartig in der Art von Erschütterungen auftreten können, berücksichtigt werden. Entweder werden ihre Auswirkungen kompensiert (z.B. rechnerisch aufgrund einer Messung oder Simulation) oder sie erhöhen den Messfehler des KMG. Da die Lagerkräfte aufgrund der oben erwähnten Einflussfaktoren nicht allein von der Geschwindigkeit und Beschleunigung der Bewegung der Abstützungen relativ zur Basis abhängig sind, ist eine Kompensation nur teilweise möglich.

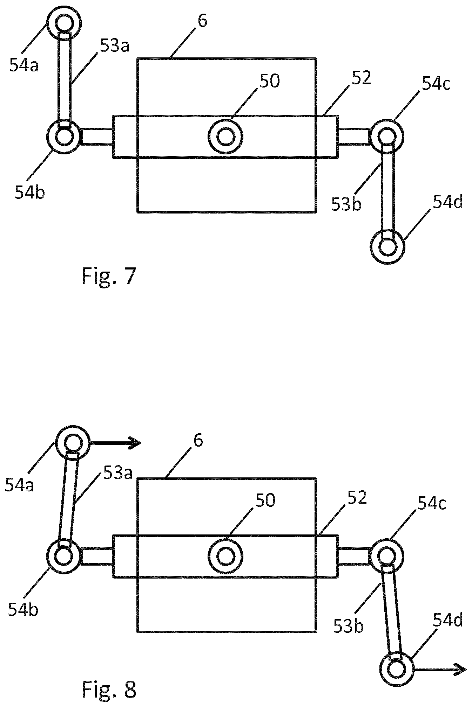

EP 0 523 023 A1 beschreibt ein Koordinatenmessgerät in Portalbauweise, dessen Portal in eine Richtung linear beweglich ist. Ein Bein des Portals ist steif ausgeführt. Das andere Bein des Portals weist eine Drehbeweglichkeit um eine erste Drehachse auf, die parallel zur Längsachse einer Traverse des Portals verläuft, welche über die Beine des Portals auf einer Basis des Koordinatenmessgerätes abgestützt ist. Der obere und der untere Schenkel des Beins, welche um die erste Drehachse relativ zueinander drehbeweglich sind, sind jeweils um eine weitere zweite bzw. dritte Drehachse drehbeweglich. Die zweite und die dritte Drehachse verlaufen parallel zu der Richtung, in der das Portal linear beweglich ist. Der obere Schenkel des Beins ist um die zweite Drehachse relativ zu der Traverse drehbeweglich. Der untere Schenkel des Beins ist relativ zu der Basis drehbeweglich. Diese Ausführungsform ist in Fig. 8a der Veröffentlichung dargestellt.

EP 2 219 010 A1 offenbart ein Koordinatenmessgerät und ein Verfahren zum Kompensieren von Fehlern. Verschiebungen auch aufgrund von Rotation werden gemessen und korrigiert.

WO 91/00493 A1 beschreibt ein feststehendes Portal für ein Präzisions-Koordinatenmessgerät. Das Portal besteht aus einem Grundkörper, einer ersten Stütze, einer zweiten Stütze und einer Traverse, die ein Viereck bilden. Die Verbindung vom Grundkörper zur zweiten Stütze wie auch die Verbindungen zwischen der ersten Stütze bzw. der zweiten Stütze zur Traverse sind drehbeweglich ausgeführt. Die Drehachsen dieser Verbindungen verlaufen weitgehend senkrecht zur Ebene des Vierecks.

Es ist eine Aufgabe der vorliegenden Erfindung, ein Koordinatenmessgerät mit einer Traverse anzugeben, bei dem Kräfte und Momente, die aufgrund von Asymmetrien der ersten und zweiten Abstützung der Traverse auf die Traverse wirken, gering gehalten werden können. Insbesondere soll es möglich sein, lediglich die erste Abstützung direkt anzutreiben und/oder auf eine Luftlagerung zumindest der zweiten Abstützung relativ zur Basis zu verzichten. Es ist eine weitere Aufgabe der Erfindung, ein Herstellungsverfahren zum Herstellen eines derartigen KMG anzugeben.

Die beigefügten Patentansprüche definieren den Schutzumfang.

Gemäß einem Grundgedanken der vorliegenden Erfindung wird eine zusätzliche Beweglichkeit der zweiten Abstützung der Traverse realisiert. Diese Beweglichkeit weist eine Drehbeweglichkeit der zweiten Abstützung relativ zur Traverse und/oder eine Drehbeweglichkeit von zwei Teilen der zweiten Abstützung relativ zueinander auf. Die Drehbeweglichkeit(en) besteht/bestehen bezüglich einer Drehachse, die quer (z.B. senkrecht) zur linearen Bewegungsrichtung (y-Richtung) der Traverse relativ zur Basis verläuft. Insbesondere kann die Richtung der Drehachse parallel zu einer Längsachse der Traverse verlaufen, wobei die Längsachse die Übergangsbereiche der Traverse zu der ersten und zweiten Abstützung verbindet und/oder wobei entlang der Längsachse das weitere bewegliche Teil (z.B. ein in x-Richtung relativ zu der Traverse beweglicher Wagen mit einer in z-Richtung beweglichen Pinole) verfahrbar ist. Die Beweglichkeit kann außer der/den genannten Drehbeweglichkeit(en) auch zumindest eine weitere Teil-Beweglichkeit aufweisen, z.B. eine lineare Beweglichkeit in y-Richtung. Die Beweglichkeit bietet daher zumindest einen rotatorischen Freiheitsgrad der Bewegung und optional zumindest einen, z.B. linearen Freiheitsgrad der Bewegung. Durch die Drehbeweglichkeit(en) wird die Stärke von Drehmomenten, die aufgrund von in y-Richtung wirkenden Lagerkräften oder Trägheitskräften auf die Traverse wirken, reduziert. Insbesondere ein Wälzlager, das bei einer Ausführungsform die Bewegung der zweiten Abstützung relativ zur Basis in y-Richtung lagert, führt zu einem kleineren Drehmoment um eine Drehachse parallel zur x-Achse. Der gleiche Vorteil ergibt sich aber auch bei einem Gleitlager mit höherem Lagerwiderstand als bei Luftlagern. Erfindungsgemäß werden ein Koordinatenmessgerät gemäß Anspruch 1 und ein Verfahren gemäß Anspruch 5 vorgeschlagen.

Ausgestaltungen des Herstellungsverfahrens ergeben sich aus der Beschreibung von Ausgestaltungen des KMG.

Wie bereits erwähnt kann an dem weiteren beweglichen Teil des KMG z.B. über eine Sensorhalterung ein Messsensor befestigt werden. Die Sensorhalterung definiert eine mechanische Schnittstelle zum An- und Abkoppeln zumindest eines Sensors. Alternativ kann über die Schnittstelle ein Zwischenteil, z.B. eine Drehvorrichtung zum Drehen des Sensors um zumindest eine Drehachse, an das weitere bewegliche Teil angekoppelt werden. An dieses Zwischenteil wiederum kann dann der Sensor angekoppelt werden oder ist daran angekoppelt. Allgemein formuliert ist das weitere bewegliche Teil daher so ausgestaltet, dass ein Sensor direkt oder indirekt ankoppelbar ist. Auch das gesamte KMG und insbesondere die Bewegungssteuerung und/oder Auswertungseinrichtung zur Koordinatenbestimmung ist/sind so ausgestaltet, dass an dem weiteren beweglichen Teil, welches relativ zu der Traverse z.B. in x-Richtung beweglich ist, indirekt oder direkt ein Messsensor befestigbar ist. Die Bewegungssteuerung berücksichtigt die Position des Messsensors bei der Steuerung der Bewegung des Sensors, um ein Werkstück zu vermessen. Die Auswertungseinrichtung berücksichtigt die Position des Messsensors bei der Koordinatenbestimmung.

Der erste Teil des Drehgelenks, der fest mit der Traverse verbunden ist, kann entweder unmittelbar mit der Traverse verbunden sein oder mittelbar über ein weiteres Teil der zweiten Abstützung.

Der in der linearen Bewegungsrichtung (y-Richtung) beweglich gelagerte Teil der zweiten Abstützung ist z.B. ein an einer Linearführung der Basis linear beweglich geführter Schlitten. Insbesondere bei einem solchen Schlitten, aber auch in anderen Fällen kann das Bewegungslager zur Reduktion des Lagerwiderstandes eine Mehrzahl von Kugeln aufweisen, die von einer Umlaufführung auf einem geschlossen umlaufenden Weg beweglich geführt sind. Bei einer Bewegung des beweglich gelagerten Teils der zweiten Abstützung relativ zur Basis werden in diesem Fall die Kugeln entlang dem Weg bewegt. Bei einer Ausgestaltung des Wälzlagers mit Kugelumlaufführung sind zwei oder mehr als zwei Gruppen von Kugeln vorhanden, die jeweils von einer Kugelumlaufführung auf einem in sich geschlossen umlaufenden Weg beweglich geführt sind. Es sind daher zwei oder mehr als zwei Kugelumlaufführungen Bestandteil des Bewegungslagers. Derartige Wälzlager bieten einen verhältnismäßig geringen Lagerwiderstand, sodass die auf die zweite Abstützung wirkenden Kräfte verhältnismäßig gering sind. Es sind jedoch alternativ andere Bewegungslager möglich. Eine andere Ausgestaltung eines Wälzlagers weist z.B. eine Mehrzahl von walzenförmigen Körpern auf.

Das Drehgelenk der zweiten Abstützung oder eine Gelenkkombination oder Bewegungsmechanik, deren Teil das Drehgelenk ist, kann außer der Drehbeweglichkeit um eine quer zur linearen Bewegungsrichtung verlaufende Drehachse auch eine Drehbeweglichkeit um eine in y-Richtung verlaufende Drehachse aufweisen. Hierdurch können insbesondere bei thermischen Ausdehnungen und Kontraktionen der Abstützungen oder der Traverse Drehmomente reduziert werden, die um eine in y-Richtung verlaufende Drehachse auf die Traverse wirken.

Gemäß den Ansprüchen ist das Drehgelenk ein erstes Drehgelenk und ist der in der linearen Bewegungsrichtung beweglich gelagerte Teil der zweiten Abstützung über ein zweites Drehgelenk, das eine Drehbewegung um eine zweite quer zur linearen Bewegungsrichtung verlaufende Drehachse ermöglicht, drehbeweglich mit dem zweiten Teil des ersten Drehgelenks verbunden. Insbesondere der genannte Schlitten kann daher über das zweite Drehgelenk und das erste Drehgelenk beweglich mit der Traverse gekoppelt sein. Insbesondere verlaufen die Drehachsen für die Drehbewegungen des ersten und des zweiten Drehgelenks parallel zueinander. Wie auch das erste Drehgelenk kann das zweite Drehgelenk Teil eines Bewegungsmechanismus sein, der nicht lediglich eine Drehbewegung um die genannte Drehachse, sondern eine weitere Beweglichkeit ermöglicht. Bei zwei Drehgelenken ist es aber auch möglich, dass sowohl bezüglich des ersten Drehgelenks als auch bezüglich des zweiten Drehgelenks lediglich ein rotoatorischer Freiheitsgrad um die genannte Drehachse geschaffen wird, ohne zusätzliche Freiheitsgrade der Bewegung. Der Bewegungsmechanismus besteht daher in diesem Fall bei beiden Drehgelenken lediglich aus dem Drehgelenk. In jedem Fall haben zwei Drehgelenke der zweiten Abstützung den Vorteil, dass eine Drehbewegung um eine der Drehachsen nicht zu einer Verkippung des relativ zu der Basis beweglich gelagerten Teils der zweiten Abstützung führt. Vielmehr kann sich dieser beweglich gelagerte Teil in der linearen Bewegungsrichtung (y-Richtung) relativ zu der Traverse bewegen, wodurch lediglich derjenige Teil der zweiten Abstützung um eine quer zur y-Richtung verlaufenden Achse verkippt wird, der das erste Drehgelenk und das zweite Drehgelenk miteinander verbindet. Auch die Traverse wird nicht um eine quer zur y-Richtung verlaufende Achse verkippt. Die Ausführung mit dem ersten und dem zweiten Drehgelenk ist insbesondere für Portal-KMGs und Mischformen von Portal-KMGs und Gantry-KMGs mit einer langen zweiten Abstützung (z.B. in der Art einer Säule) geeignet, da aufgrund der Länge der zweiten Abstützung ein Versatz des beweglich gelagerten Teils der zweiten Abstützung relativ zu der Traverse in y-Richtung nur zu einem kleinen Versatz von beweglich gelagertem Teil und Traverse in Längsrichtung der zweiten Abstützung (z-Richtung) führt. Z.B. führt ein Versatz des beweglich gelagerten Teils der zweiten Abstützung in y-Richtung um 1 mm bei einer Länge der zweiten Abstützung von 1 m zu einem Versatz in z-Richtung in der Größenordnung von 0,5 µm. Dies ist in vielen Fällen noch akzeptabel, hängt aber von der angestrebten Genauigkeit der Koordinatenmessung ab. Bevorzugt wird jedoch nicht nur bei der Ausführungsform mit einem ersten und einem zweiten Drehgelenk, den Versatz des beweglich gelagerten Teils der zweiten Abstützung relativ zur Traverse möglichst gering zu halten. Die folgende Ausgestaltung bietet hierfür eine Lösung:
Insbesondere kann der beweglich gelagerte Teil der zweiten Abstützung über eine mechanische Bewegungskopplung, die zusätzlich zu der Traverse vorhanden ist, mit einem in der linearen Bewegungsrichtung relativ zu der Basis beweglichen Teil der ersten Abstützung gekoppelt sein. Optional kann ein motorischer Antrieb direkt oder (in einem anderen Fall) indirekt mit der ersten Abstützung gekoppelt sein, um eine Bewegung der Traverse relativ zu der Basis in der linearen Bewegungsrichtung anzutreiben. Insbesondere weist die erste Abstützung mit Ausnahme der Beweglichkeit relativ zur Basis in der linearen Bewegungsrichtung (y-Richtung) keine weiteren beabsichtigten Beweglichkeiten (d.h. Freiheitsgrade der Bewegung) auf. Unbeabsichtigte Beweglichkeiten entstehen durch eine in jedem Fall auch bei sehr steifer Ausführung der ersten Abstützung vorhandene Elastizität und durch thermische Ausdehnung und Kontraktion. Abgesehen davon ist die erste Abstützung aber in sich unbeweglich (steif). Dagegen weist die zweite Abstützung zumindest die durch Drehgelenk realisiert Beweglichkeit auf. Dies gilt vorzugsweise auch für andere Ausgestaltungen des KMG, die keine mechanische Bewegungskopplung der ersten und zweiten Abstützung haben.

Die mechanische Bewegungskopplung hat aber den Vorteil, dass sie den Versatz des relativ zur Basis beweglich gelagerten Teils der zweiten Abstützung zur ersten Abstützung und damit auch zur Traverse reduziert. Sie ermöglicht damit insbesondere auch Beweglichkeiten der zweiten Abstützung durch das zumindest eine Drehgelenk und optional weitere Beweglichkeiten der zweiten Abstützung, ohne diese Beweglichkeiten steuern oder auf andere Weise als durch die mechanische Bewegungskopplung begrenzen zu müssen. Die Wirkungsweise der Ausführungsform mit mechanischer Bewegungskopplung kann daher auch so aufgefasst werden: Die mechanische Bewegungskopplung verhindert oder reduziert einen Versatz des beweglich gelagerten Teils der zweiten Abstützung relativ zur ersten Abstützung in y-Richtung. Im Fall einer steifer und/oder mit größerer Masse ausgeführten ersten Abstützung wirkt sich die resultierende Steifigkeit und/oder Trägheit der ersten Abstützung über die mechanische Bewegungskopplung auch auf den beweglich gelagerten Teil der zweiten Abstützung aus. Da eine mechanische Bewegungskopplung dieser Art aufgrund des Abstandes zwischen der ersten Abstützung und der zweiten Abstützung dennoch einen Versatz in y-Richtung nicht völlig ausschließen kann, ist das zumindest eine Drehgelenk der zweiten Abstützung vorgesehen.

Ein Antrieb, insbesondere ein motorischer Antrieb, des KMG, der die Bewegung der Traverse in der linearen Bewegungsrichtung (y-Richtung) relativ zur Basis bewirkt, kann wie erwähnt seine Antriebskräfte direkt auf die erste Abstützung ausüben. Alternativ oder zusätzlich kann der Antrieb oder ein weiterer Antrieb für die Beweglichkeit der Traverse in y-Richtung Antriebskräfte über die mechanische Bewegungskopplung und damit indirekt sowohl auf die erste Abstützung als auch auf die zweite Abstützung ausüben. Dies hat den Vorteil, dass Effekte von asymmetrisch, lediglich oder überwiegend auf die erste Abstützung wirkenden Antriebskräften reduziert werden.

Gemäß einer ersten Ausgestaltung der mechanischen Kopplung wird zur Kraftübertragung zwischen dem beweglich gelagerten Teil der zweiten Abstützung und der ersten Abstützung zumindest ein umlenkbares Zugmittel (z.B. ein Seil, Riemen, Zahnriemen oder Band, insbesondere ein Drahtseil) verwendet. Vorzugsweise wird zumindest ein zweites umlenkbares Zugmittel für diese Kraftübertragung verwendet, wobei das erste Zugmittel und das zweite Zugmittel Kräfte in entgegengesetzter Richtung übertragen. Während das erste Zugmittel z.B. Kräfte auf den beweglich gelagerten Teil der zweiten Abstützung in positive y-Richtung überträgt, überträgt das zweite Zugmittel z.B. Kräfte auf das beweglich gelagerte Teil der zweiten Abstützung in negative y-Richtung. Entsprechendes gilt für die erste Abstützung. Dabei ist es möglich, dass das erste Zugmittel und das zweite Zugmittel Abstände desselben in sich geschlossen umlaufenden Zugmittels sind.

Das zumindest eine umlenkbare Zugmittel der mechanischen Bewegungskopplung kann so angeordnet und angekoppelt sein, dass die zwischen der ersten Abstützung und dem beweglich gelagerten Teil der zweiten Abstützung zu übertragenden Kräfte ausschließlich über das zumindest eine umlenkbare Zugmittel übertragen werden.

Alternativ kann außer zumindest einem umlenkbaren Zugmittel zumindest ein weiteres Kraftübertragungsmittel Teil der mechanischen Bewegungskopplung sein. Insbesondere kann dieses weitere Kraftübertragungsmittel eine Übertragung von Kräften nicht nur in einer Zugrichtung, sondern auch in der entgegengesetzten Richtung ermöglichen. Dies betrifft nicht nur Kraftübertragungsmittel wie Gestänge, die Kräfte durch Linearbewegung in ihre Längsrichtung übertragen, sondern z.B. auch Wellen und Getriebe. Z.B. kann ein Spindelgetriebe als Teil der mechanischen Bewegungskopplung verwendet werden. Ferner ist es möglich, dass auf umlenkbare Zugmittel, die nicht zur Kraftübertragung entgegen der Zugrichtung geeignet sind, verzichtet wird, d.h. die mechanische Bewegungskopplung keine solchen Zugmittel zur Kraftübertragung verwendet. Z.B. können die ersten Abstützung und der beweglich gelagerte Teil der zweiten Abstützung über zumindest eine Welle und für die erste Abstützung und die zweite Abstützung jeweils ein Getriebe mechanisch miteinander gekoppelt sein.

Wenn jedoch ein umlenkbares Zugmittel verwendet wird, kann es z.B. über Umlenkrollen und/oder umlenkende Gleitflächen umgelenkt werden. Die Kraftübertragung von dem umlenkbaren Zugmittel auf die erste Abstützung und/oder auf das beweglich gelagerte Teil der zweiten Abstützung kann z.B. über eine Rolle oder ein Rad erfolgen oder ein Ende oder ein anderer Abschnitt des Zugmittels kann an dem jeweiligen Teil befestigt sein.

Wenn ein Antrieb der ersten und zweiten Abstützung über die mechanische Bewegungskopplung realisiert werden soll oder realisiert ist, kann z.B. ein Spindelantrieb zur Einleitung der Antriebskräfte auf die mechanische Bewegungskopplung oder auf getrennte Kraftübertragungsmittel für die erste und zweite Abstützung übertragen werden. Die mechanische Bewegungskopplung kann daher auch dadurch realisiert werden/sein, dass der Antrieb in gleicher Weise auf die erste Abstützung und den beweglich gelagerten Teil der zweiten Abstützung einwirkt, d.h. die gleiche Bewegung in y-Richtung bewirkt. Dabei kann der Antrieb die erste Abstützung und den beweglich gelagerten Teil der zweiten Abstützung mechanisch miteinander koppeln oder über eine mechanische Kopplung der Abstützungen beide Abstützungen antreiben. Im Fall eines Spindelantriebs ist die Antriebsspindel z.B. drehbar relativ zur Basis gelagert und wird von zumindest einem Motor (oder alternativ manuell) angetrieben. Die Antriebsspindel treibt über ein Zahnrad z.B. eine Welle an, über die wiederum die beiden Abstützungen angetrieben werden. Es sind jedoch auch Ausführungsformen mit anderen motorischen Antrieben (z.B. zumindest einem Linearmotor) und/oder mit anderen mechanischen Kopplungen möglich.

Generell wird bevorzugt, dass die mechanische Bewegungskopplung sehr steif ausgeführt ist, d.h. nur einen sehr geringen Versatz der ersten Abstützung und des beweglich gelagerten Teils der zweiten Abstützung erlaubt.

Bevorzugt wird, dass das Drehgelenk Bestandteil eines Watt-Gestänges ist, über das der in der linearen Bewegungsrichtung beweglich gelagerte Teil der zweiten Abstützung beweglich mit der Traverse gekoppelt ist. Ein Watt-Gestänge weist fünf Drehachsen auf, wobei vier der entsprechenden fünf Drehgelenke seriell über eine Reihe von drei starren Koppelelementen gekoppelt sind. Ein erstes Gelenk ist über ein erstes Koppelelement mit einem zweiten Gelenk, dieses wiederum über ein zweites Koppelelement mit einem vierten Gelenk und dieses wiederum über ein drittes Koppelelement mit einem fünften Gelenk gekoppelt. Das in dieser kinematischen Kopplung in der kinematischen Mitte angeordnete dritte Drehgelenk ist das oben auch als erstes Drehgelenk bezeichnete Drehgelenk der zweiten Abstützung, d.h. der erste Teil dieses Drehgelenks ist fest (mittelbar oder unmittelbar) mit der Traverse verbunden. Der zweite Teil dieses Drehgelenks ist mit dem zweiten Koppelelement verbunden. Durch eine Drehbewegung dieses Drehgelenks wird daher das zweite Koppelelement relativ zu der Traverse gedreht.

In Fall eines Watt-Gestänges Fall kann auf das weiter oben genannte zweite Drehgelenk verzichtet werden, d.h. außer den fünf Drehgelenken des Wattgestänges weist die zweite Abstützung kein weiteres Drehgelenk auf. Das Watt-Gestänge ist ein bevorzugtes Beispiel für einen Bewegungsmechanismus, der weitere Freiheitsgrade der Bewegung zusätzlich zu dem rotatorischen Freiheitsgrad des Drehgelenks bietet. Das Watt-Gestänge ist dabei so ausgestaltet, dass eine Drehbewegung um die Drehachse des Drehgelenks zu einer zusätzlichen Relativbewegung von beweglich gelagertem Teil der zweiten Abstützung und Traverse in y-Richtung führt, wobei dieser Versatz sehr viel größer ist als der durch die Drehbewegung des Drehgelenks ebenfalls bewirkte relative Versatz der Traverse und des beweglich gelagerten Teils der zweiten Abstützung in z-Richtung. Die z-Richtung ist dadurch definiert, dass sie senkrecht zu der y-Richtung, der sogenannten linearen Bewegungsrichtung, verläuft und außerdem quer und insbesondere senkrecht zur x-Richtung, in der sich insbesondere die Längsachse der Traverse erstreckt. Ein sehr viel kleinerer Versatz in z-Richtung im Vergleich zu dem Versatz in y-Richtung ergibt sich bei entsprechend gewählter Ausrichtung des Watt-Gestänges bereits aus der Eigenschaft eines Watt-Gestänges. Ein Watt-Gestänge hat immer eine solche Vorzugsrichtung für eine lineare Bewegung die überwiegend stattfindet, ohne eine lineare Bewegung in einer senkrecht dazu stehenden und senkrecht zu den Drehachsen des Watt-Gestänges verlaufenden Richtung zu bewirken. Die Vorzugsrichtung des Watt-Gestänges ist hier die y-Richtung. Dies hat den Vorteil, dass die Drehbewegung des Drehgelenks der zweiten Abstützung nicht zu einem erheblichen Versatz in z-Richtung führt. Insbesondere sind die mechanische Konstruktion und die Betriebsparameter (z. B. maximale Beschleunigung und/oder andere kinematische Maximalwerte) des KMG für einen maximalen Bewegungsbereich des Watt-Gestänges ausgelegt, innerhalb dem es maximal zu einem Versatz in z-Richtung kommt, der 1 Promille, z. B. 0,1 Promille und vorzugsweise 0,05 Promille des Versatzes in y-Richtung beträgt.

Ausführungsbeispiele der Erfindung werden nun unter Bezugnahme auf die beigefügte Zeichnung beschrieben. Die einzelnen Figuren der Zeichnung zeigen:
- Fig. 1: eine vereinfachte dreidimensionale Darstellung eines KMG in Portalbauweise,
- Fig. 2: das KMG aus Fig. 1 in einer Ansicht von rechts unten,
- Fig. 3: das KMG aus Fig. 1 und Fig. 2 in einer Seitenansicht von der links hinten in Fig. 1 gelegenen Seite,
- Fig. 4: eine Teildarstellung eines Drehgelenks, über das die Traverse des in Fig. 1 bis Fig. 3 dargestellten KMG drehbeweglich mit der zweiten Abstützung des KMG verbunden ist,
- Fig. 5: ein KMG ähnlich dem in Fig. 1 bis Fig. 3, wobei jedoch die zweite Abstützung über ein Watt-Gestänge mit der Traverse des KMG beweglich verbunden ist,
- Fig. 6: eine Teildarstellung des Übergangsbereichs zwischen der Traverse und der zweiten Abstützung aus Fig. 5, wobei eine Abdeckung des Watt-Gestänges teilweise weggebrochen dargestellt ist, um den Blick auf die beweglichen Teile des Watt-Gestänges freizugeben,
- Fig. 7: schematisch ein Watt-Gestänge ähnlich dem in Fig. 5 und Fig. 6, wobei jedoch die Drehgelenke nicht als Filmscharniere ausgestaltet sind,
- Fig. 8: das Watt-Gestänge aus Fig. 7, jedoch in einer anderen Bewegungsposition, und
- Fig. 9: schematisch eine Anordnung mit der zweiten Abstützung aus den Fig. 1-3, wobei jedoch die Drehgelenke nicht als Filmscharniere ausgestaltet sind und wobei durch gestrichelte Linien eine Bewegungsposition dargestellt ist, in der der Schlitten unten in der Anordnung in y-Richtung (oder, bei einer anderen Interpretation der Figur, in x-Richtung) relativ zu der Traverse oben in der Anordnung verschoben ist.

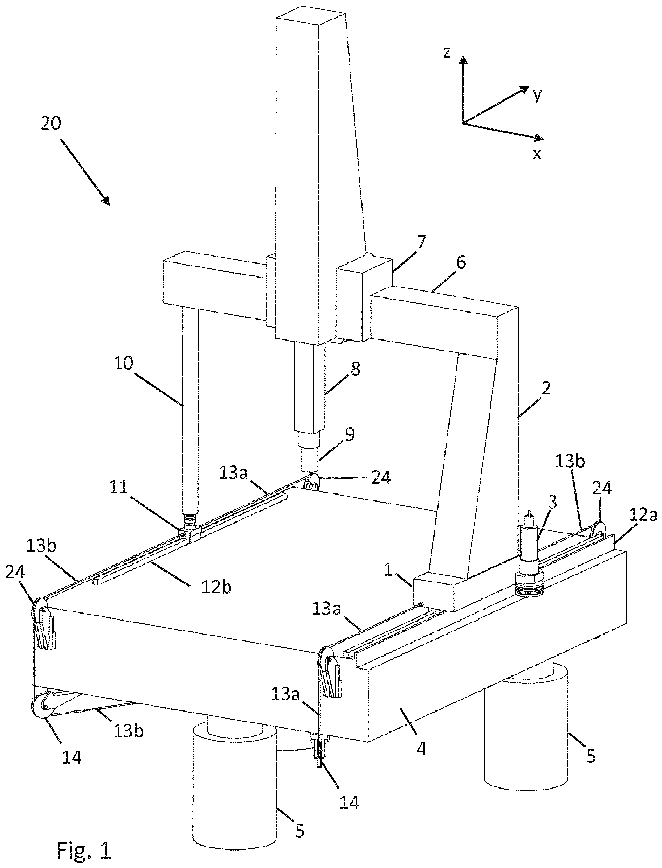

Das in Fig. 1 bis Fig. 3 dargestellte KMG 20 in Portalbauweise weist als Basis 4 eine Grundplatte auf, die nach unten über drei Stützen 5 abgestützt ist. Verschiedene bewegliche Teile des KMG 20 sind in jeweils einer der Achsrichtungen des rechts oben in Fig. 1 schematisch dargestellten kartesischen Koordinatensystems x, y, z beweglich. Die Traverse 6 ist relativ zur Basis 4 in y-Richtung beweglich. Ein Wagen 7 ist relativ zur Traverse 6 in x-Richtung beweglich, wobei sich auch die Längsachse der Traverse 6 in einer Richtung erstreckt, die parallel zur x-Achse verläuft. Eine Pinole 8 ist relativ zu dem Wagen 7 in z-Richtung beweglich. Am unteren Ende der Pinole 8 befindet sich ein Messsensor 9, an den wiederum ein Taststift 21 angekoppelt ist. Durch taktiles Antasten eines Werkstücks mit dem Taststift 21 wird von dem KMG 20 die Messinformation gewonnen, aus der sich die Koordinaten des angetasteten Oberflächenpunktes des Werkstücks ermitteln lassen.

Die Traverse 6 ist über eine von einem Antrieb 3 angetriebene erste Abstützung 2 und - an einem entgegengesetzten Ende der Traverse 6 - über eine zweite Abstützung 10 auf der Basis 4 abgestützt. Dabei sind die erste Abstützung 2 und die zweite Abstützung 10 jeweils in y-Richtung von einer Linearführung 12a, 12b beweglich geführt. Genauer gesagt ist ein y-Wagen 1 der ersten Abstützung 2 von der rechts vorne in Fig. 1 dargestellten Linearführung 12a geführt und ist ein sehr viel kleinerer y-Wagen, der als Schlitten 11 bezeichnet wird, der zweiten Abstützung 10 beweglich von der links hinten in Fig. 1 dargestellten Linearführung 12b geführt.

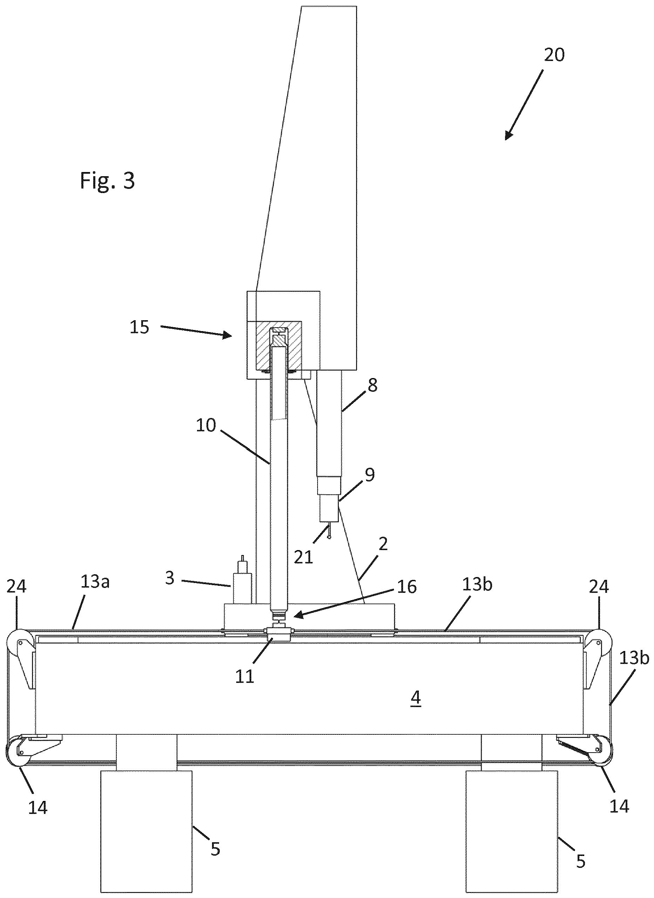

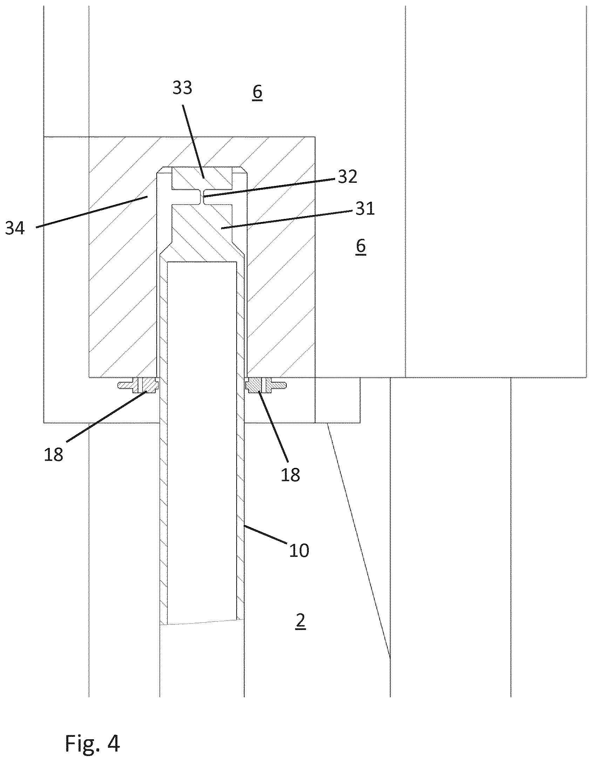

Wie noch genauer anhand von Fig. 3 und Fig. 4 beschrieben wird, ist die zweite Abstützung 10 um zwei parallel zueinander verlaufende und parallel zur x-Richtung verlaufende Drehachsen drehbeweglich. Das obere Ende der zweiten Abstützung 10 ist mittels eines ersten, oberen Drehgelenk 15 mit der Traverse 6 verbunden und der Schlitten 11 ist über ein zweites, unteres Drehgelenk 16 mit dem mittleren Teil der zweiten Abstützung 10 verbunden. Dieses mittlere Teil der zweiten Abstützung 10 verbindet somit das obere Drehgelenk 15 mit dem unteren Drehgelenk 16. Weitere Beweglichkeiten der zweiten Abstützung 10 sind bei einer ersten Ausgestaltung nicht beabsichtigt. Allerdings ist es möglich, dass zumindest eines der beiden Drehgelenke oder eine Gelenkkombination oder Bewegungsmechanik, deren Teil das jeweilige Drehgelenk ist, auch eine Drehbeweglichkeit um eine in y-Richtung verlaufende Drehachse aufweist. In der in Fig. 3 gezeigten Seitenansicht kann sich zum Beispiel unmittelbar oberhalb des unteren Drehgelenks 16 und/oder unmittelbar unterhalb des oberen Drehgelenks 15 jeweils ein zusätzliches Drehgelenk (zum Beispiel Filmscharnier) befinden, das eine solche Drehbeweglichkeit um die y-Richtung ermöglicht.

Der mittlere Teil der zweiten Abstützung 10 ist z. B. in Leichtbauweise als Rohr aus faserverstärktem Kunststoff hergestellt und ist im Verhältnis zu seiner geringen Masse sehr steif. Noch steifer ist allerdings die erste Abstützung 2 ausgeführt, über die die Traverse 6 ohne jegliche beabsichtigte Beweglichkeiten - mit Ausnahme der linearen Beweglichkeit in y-Richtung aufgrund der Linearführung 12a - auf der Basis 4 abgestützt ist.

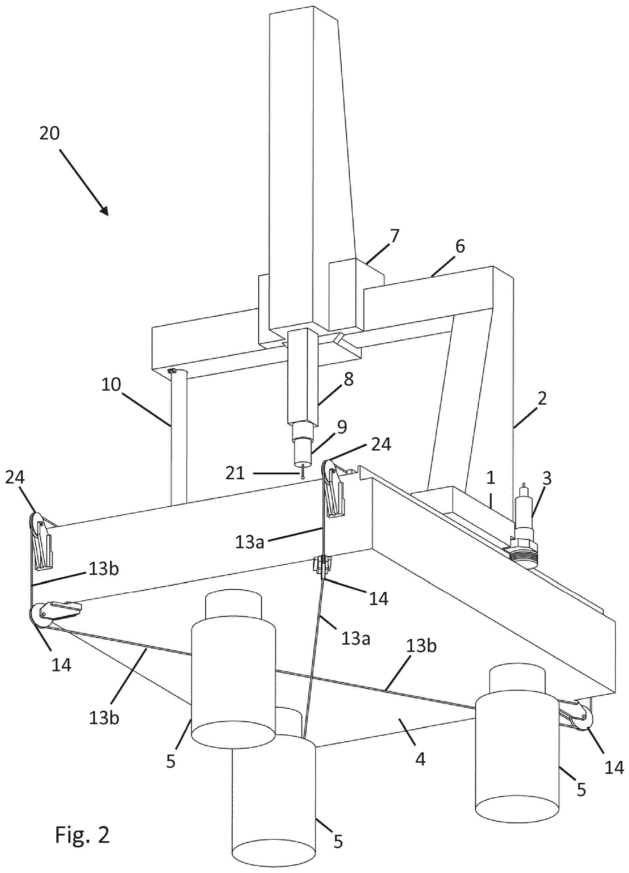

Der Schlitten 11 und der y-Wagen 1 sind über zwei Zugseile 13a, 13b (z.B. Stahlseile mit geringer Zugelastizität) miteinander gekoppelt. Das erste Zugseil 13a ist mit dem in Fig. 1 vorne liegenden Ende des y-Wagens 1 verbunden. Es wird über eine rechts vorne in Fig. 1 dargestellte obere Umlenkrolle 24 an der Vorderseite der Basis 4 nach unten umgelenkt und von einer unten vorne liegenden unteren Umlenkrolle 14 in eine Richtung nach diagonal links hinten in Fig. 1 umgelenkt. Fig. 2 zeigt den diagonal von vorne rechts nach hinten links führenden Verlauf des ersten Seils 13a. Links hinten in Fig. 2 und unterhalb der Basis 4 ist eine weitere untere Umlenkrolle 14 vorhanden, die aus Fig. 2 nicht erkennbar ist. Sie ist jedoch aus der Seitenansicht der Fig. 3 erkennbar und befindet sich dort links unten in der Darstellung. Dort wird das erste Seil 13a entlang der Hinterkante der Basis 4 nach oben umgelenkt, bis zu einer weiteren oberen Umlenkrolle 24, die links hinten in Fig. 1 und links oben in Fig. 3 dargestellt ist. Von dieser oberen Umlenkrolle 24 wird das erste Seil 13a nach vorne in eine Richtung entlang der Linearführung 12b umgelenkt und erstreckt sich bis zu dem Schlitten 11, an dem es hinten befestigt ist.

Das zweite Seil 13b ist in der Darstellung von Fig. 1 vorne an dem Schlitten 11 befestigt, verläuft entlang der Linearführung 12b bis zu einer oberen Umlenkrolle 24, die in Fig. 1 links vorne an der Vorderkante der Basis 4 dargestellt ist. Dort wird das zweite Seil 13b nach unten entlang der Vorderkante der Basis 4 umgelenkt. Unten an der Vorderkante der Basis 4 (in Fig. 1 links unten) wird das zweite Seil 13b durch eine untere Umlenkrolle 14 in eine Richtung diagonal nach rechts hinten umgelenkt. Wie auch das erste Seil 13a verläuft das Seil 13b unterhalb der Basis 4 in diagonaler Richtung in einer Ebene, die parallel zur x-y-Ebene des kartesischen Koordinatensystems verläuft. Das zweite Seil 13b wird in der Darstellung der Fig. 1 rechts hinten unterhalb der Basis 4 durch eine in Fig. 1 nicht erkennbare untere Umlenkrolle 14, die jedoch rechts unten in Fig. 2 erkennbar ist, nach oben entlang der Hinterkante der Basis 4 umgelenkt. Oben hinten in Fig. 1 erkennbar ist eine weitere obere Umlenkrolle 24, von der das zweite Seil 13b in eine Richtung entlang der Linearführung 12a umgelenkt wird. Das zweite Seil 13b verläuft bis zum in Fig. 1 hinten liegenden Rand des y-Wagens 1 und ist dort an dem Wagen 1 befestigt.

Wenn sich die erste Abstützung 2 angetrieben durch den y-Antrieb 3 nach rechts hinten in Fig. 1 in y-Richtung bewegt, zieht der y-Wagen 1 über das erste Seil 13a den Schlitten 11 ebenfalls in y-Richtung nach rechts hinten entlang der Linearführung 12b. Wenn der y-Wagen 1 der ersten Abstützung 2 von dem y-Antrieb 3 in umgekehrte y-Richtung nach links vorne in Fig. 1 bewegt wird, zieht der y-Wagen 1 das vordere Ende des Schlittens 11 über das zweite Seil 13b ebenfalls in die umgekehrte y-Richtung. Dadurch werden Kräfte und Momente aufgrund des direkt lediglich auf die erste Abstützung 2 wirkenden Antriebs 3 und aufgrund unterschiedlicher Massen der ersten Abstützung 2 und der zweiten Abstützung 10 ausgeglichen. Dennoch kann es vorübergehend zu einem leichten Versatz von y-Wagen 1 und Schlitten 11 kommen. Durch die bereits erwähnten Gelenke 15, 16, die in Fig. 3 dargestellt sind, führt dieser Versatz jedoch nicht zu einem Versatz des links hinten in Fig. 1 dargestellten Endes der Traverse 6 zu dem rechts vorne in Fig. 1 dargestellten Ende der Traverse 6. Vielmehr kann der mittlere Teil der zweiten Abstützung 10 z.B. in der Seitenansicht der Fig. 3 je nach Richtung des Versatzes von y-Wagen 1 und Schlitten 11 in unterschiedlicher Drehrichtung um eine senkrecht zur Figurenebene der Fig. 3 verlaufende Drehachse verkippen. Aufgrund der verhältnismäßig großen Länge der zweiten Abstützung 10 führt dies nur zu einem sehr kleinen Versatz der entgegengesetzten Enden der Traverse 6 in z-Richtung.

Wie die vergrößerte Darstellung in Fig. 4 zeigt, ist das obere Drehgelenk 15 als Filmscharnier ausgeführt. Die Darstellung in Fig. 4 und auch die Darstellung in Fig. 3 zeigen das obere Drehgelenk 15 in einem Teilschnitt, d.h. ein in Fig. 4 vor der Bildebene liegender Bereich der Traverse 6 und auch der zweiten Abstützung 10 ist weggebrochen dargestellt. Die dadurch freigelegten Flächen sind im Fall der Traverse 6 durch von links unten nach rechts oben verlaufende Linien schraffiert und im Fall der zweiten Abstützung 10 durch von links oben nach rechts unten verlaufende Linien schraffiert. Auf diese Weise ist erkennbar, dass es sich bei der zweiten Abstützung 10 um ein Rohr handelt. Der obere Bereich des Rohres und der obere Abschlussbereich 31 des Rohres sind wie auch das Filmscharnier 15 in eine Aussparung 34 der Traverse 6 aufgenommen. Der obere Abschlussbereich 31 bildet das untere Ende des Filmscharniers, welches über den beweglichen, filmartig dünnen Bereich 32 des Filmscharniers mit dem oberen, feststehenden Bereich 33 des Filmscharniers verbunden ist, der wiederum fest mit der Traverse 6 verbunden ist.

Am unteren Ende der Aussparung 34 befinden sich rechts und links von dem Rohr der zweiten Abstützung 10 zwei Kontaktschalter 18, die bei Kontakt mit dem Rohr ein Signal erzeugen. Verkippt das Rohr, oder allgemeiner formuliert der mittlere Teil der zweiten Abstützung 10, aufgrund einer Drehbewegung um die Drehachse des oberen, ersten Drehgelenks 15 so weit, dass ein Kontakt zu einem der Kontaktschalter 18 entsteht (oder alternativ die aufgrund des Kontakts entstehende Kraft auf den Kontaktschalter 18 ausreichend groß wird, um das Schaltsignal zu erzeugen), wird die Verkippung detektiert. Es besteht daher ein Bereich für die Verkippung der zweiten Abstützung 10 um eine parallel zur x-Richtung verlaufende Drehachse, in dem kein Schaltsignal durch einen der Kontaktschalter 18 erzeugt wird. Dies ist der für den Betrieb maximal zulässige oder maximal erwünschte Bewegungsbereich. Insbesondere wird bei Verkippungen innerhalb dieses Bereichs die Genauigkeit der Koordinatenmessungen nicht mehr als maximal vorgegeben beeinflusst. Wenn einer der Kontaktschalter 18 daher ein Schaltsignal erzeugt, kann entweder der Betrieb des KMG unterbrochen werden oder die Information abgespeichert werden, dass der maximal erlaubte Verkippungsbereich an seiner Grenze erreicht oder verlassen wurde, oder eine entsprechende Warnung z.B. an einen Benutzer ausgegeben werden.

Die beiden Kontaktschalter 18 in Fig. 4 sind lediglich ein Ausführungsbeispiel. Das KMG kann auch auf andere Weise betrieben werden. Allgemeiner formuliert wird es bevorzugt, dass das Erreichen oder das Überschreiten eines Grenzwertes für die maximal vorgegebene Verkippung der zweiten Abstützung um eine Drehachse parallel zur x-Richtung detektiert wird und zumindest eine der drei zuvor erwähnten Maßnahmen (Abbruch des Betriebes, Speicherung der Information und/oder Warnung) ergriffen wird. Vorzugsweise erfolgt diese Überwachung automatisch und z.B. optisch durch eine Kamera und/oder Lichtschranke und/oder durch Kontaktschalter. Auch andere Detektionsprinzipien können angewandt werden. Z.B. kann alternativ oder zusätzlich zu Kontaktschaltern zumindest ein Magnetfeldsensor und/oder ein kapazitiver Sensor verwendet werden, um das Erreichen oder Überschreiten des Grenzwertes für die maximal vorgegebene Verkippung zu detektieren. Eine entsprechende Ausgestaltung des KMG weist die entsprechende Detektionsanordnung und eine Steuerung auf, die beim Eintreten des erwähnten Detektionsereignisses die erwähnte Maßnahme ergreift.

Wie die Darstellung des zweiten unteren Drehgelenks 16 in Fig. 3 andeutet, kann auch dieses Drehgelenk 16 als Filmscharnier ausgestaltet sein. Die Ausgestaltung kann der in Fig. 4 gezeigten entsprechen.

Die Aussparung 34 in der Traverse 6 hat den Vorteil, dass sie außerdem die Verkippung des mittleren Teils der zweiten Abstützung 10 begrenzt. Wenn bei einer Verkippung um eine parallel zur x-Richtung verlaufende Drehachse einer der Schalter 18 bereits Kontakt detektiert hat (oder bei einer Ausführungsform ohne solche Kontaktschalter), kann der mittlere Teil der zweiten Abstützung 10 am unteren Ende der Aussparung 34 an den Rand der Aussparung 34 anschlagen, sodass keine stärkere Verkippung möglich ist. Dadurch wird die Konstruktion vor mechanischer Beschädigung geschützt. Auch wird die Stabilität des KMG insgesamt gewährleistet und werden somit andere Komponenten des KMG vor Beschädigung geschützt.

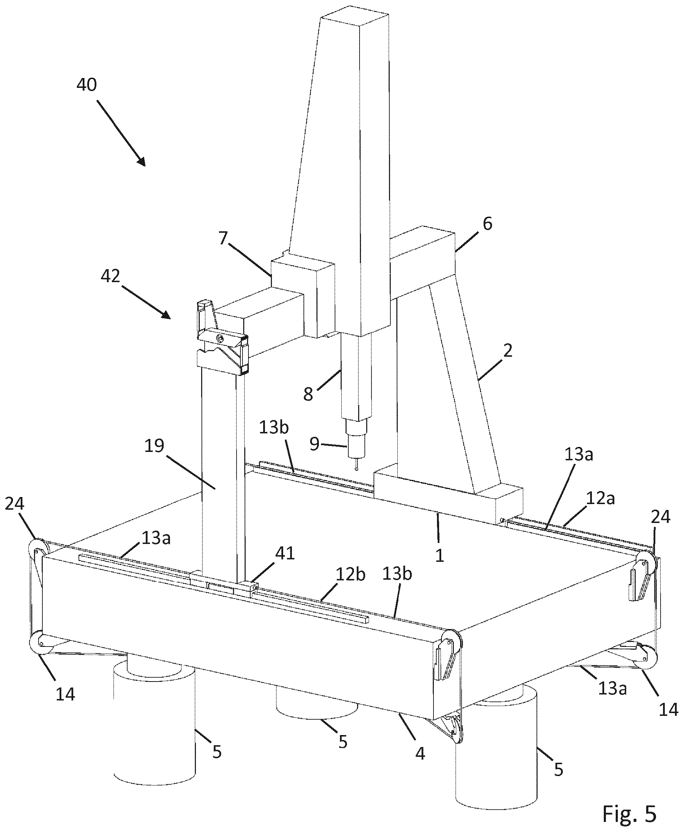

Das in Fig. 5 dargestellte KMG 40 unterscheidet sich von dem in Fig. 1 bis Fig. 3 dargestellten KMG 20 lediglich durch die Ausgestaltung der zweiten Abstützung 19. Am unteren Ende der Abstützung 19 befindet sich ein Schlitten 41, der z.B. in y-Richtung länger ausgeführt ist als der Schlitten 11 des KMG 20. Der mittlere Teil der zweiten Abstützung 19 ist nicht über ein Drehgelenk mit dem Schlitten 41 verbunden. Allerdings kann ein Wälzlager, über das der Schlitten 41 in y-Richtung linearbeweglich relativ zur Basis gelagert ist, eine geringe Steifigkeit für Drehbewegungen um eine Drehachse in y-Richtung aufweisen. Dies ist eine Variante der oben erwähnten Bewegungsmechanik, die eine Drehbewegung der zweiten Abstützung relativ zur Basis um eine in y-Richtung verlaufende Drehachse ermöglicht. Insbesondere können dadurch Längenänderungen der Traverse in x-Richtung und unterschiedliche Längenänderungen der ersten und zweiten Abstützung in z-Richtung aufgrund thermischer Ausdehnung oder Kontraktion zumindest teilweise kompensiert werden.

In der speziellen Ausführungsform, die in Fig. 5 dargestellt ist, ist der mittlere Teil der zweiten Abstützung 19 als Rechteckrohr ausgeführt, welches ebenfalls wie der Schlitten 41 eine größere Länge in y-Richtung hat als es bei der zweiten Abstützung 10 des KMG 20 in Fig. 1 der Fall ist. Das Rechteckrohr ist daher steif bezüglich einer Verformung in y-Richtung.

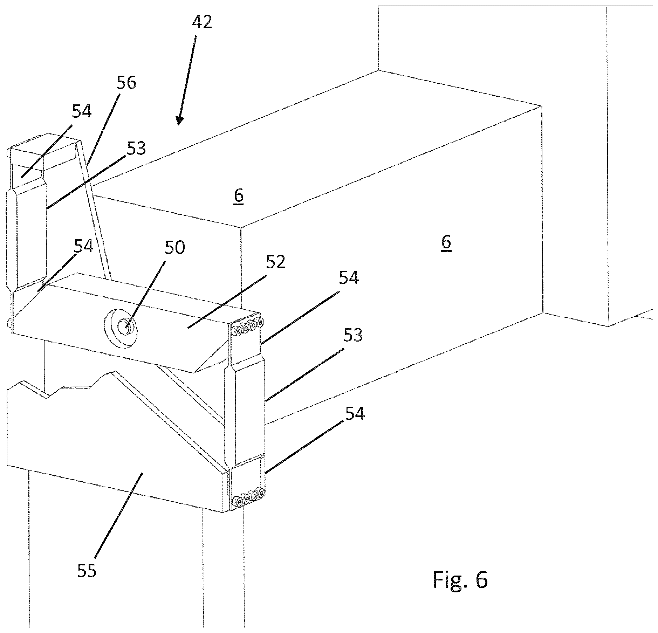

Das obere Ende des mittleren Teils der zweiten Abstützung 19 ist über ein Watt-Gestänge 42 mit der Traverse 6 verbunden. In der Darstellung der Fig. 6 ist lediglich ein unterer Bereich einer vorderen Abdeckplatte 55 des Watt-Gestänges 42 dargestellt. In der Darstellung ist der obere Bereich weggebrochen, um den Blick auf das vollständige Watt-Gestänge 42 freizugeben. Die vordere Abdeckplatte 55 ist z. B. wie die hintere Abdeckplatte 56 geformt. Die beiden Abdeckplatten 55, 56 können sich parallel zueinander erstrecken und nehmen das Watt-Gestänge 42 zwischen sich auf. Ferner verbinden die beiden Abdeckplatten 55, 56 das erste und fünfte Drehgelenk in der kinematischen Gelenk-Kette des Watt-Gestänges 42 fest mit dem mittleren Teil der zweiten Abstützung 19. Das erste Drehgelenk der kinematischen Kette befindet sich links oben in der Darstellung der Fig. 6. Es ist an einem Klotz 57 befestigt, welcher die beiden Abdeckplatten 55, 56 fest miteinander verbindet. Das fünfte Drehgelenk ist rechts unten in Fig. 6 dargestellt. Es ist ebenfalls über einen (nicht erkennbaren) Klotz mit den beiden Abdeckplatten 55, 56 fest verbunden. In dem Ausführungsbeispiel sind die ersten, zweiten, vierten und fünften Drehgelenke der kinematischen Kette des Watt-Gestänges 42 als Filmscharniere 54 ausgestaltet. Sie könnten alternativ jedoch auch anders ausgeführt werden. Filmscharniere haben den Vorteil, dass sie spielfrei sind, keine Schmierstoffe benötigen und über sehr lange Betriebszeiträume einer Drehbewegung denselben Widerstand entgegensetzen. Zwischen dem ersten und dem zweiten Filmscharnier 54 sowie zwischen dem vierten und dem fünften Filmscharnier 54 befindet sich jeweils ein im Ausführungsbeispiel stabförmiges Verbindungselement 53 (das erste bzw. dritte Koppelelement). Ferner sind das zweite und das vierte Filmscharnier 54 durch eine starre Querverbindung 52 (das zweite Koppelelement, hier einen Querbalken) miteinander verbunden, der in dem Ausführungsbeispiel als Trapezoid ausgestaltet ist. In der Mitte des Querbalkens 52 befindet sich das dritte Drehgelenk 50 des Watt-Gestänges 42, über das der Balken 52 drehbeweglich um eine in x-Richtung verlaufende Drehachse mit der Traverse 6 verbunden ist. Das dritte Drehgelenk 50 ist daher nicht in dem Sinn Teil der kinematischen Kette, dass eine Drehbewegung um seine Drehachse einen Winkel verändert, der durch die Positionen der Drehachsen des zweiten, dritten und vierten Drehgelenks definiert ist. Vielmehr ist die Querverbindung 52 (das zweite Koppelelement) ein starres Kettenglied, das aber über das dritte Drehgelenk die Verbindung zur Traverse bildet.

Das dritte Drehgelenk 50 kann optional mit einem Pendellager kombiniert sein, so dass die zweite Abstützung 19 um eine in y-Richtung verlaufende Drehachse pendeln kann. In diesem Fall ist das Watt-Gestänge ein Ausführungsbeispiel für eine Bewegungsmechanik, deren Teil das Drehgelenk ist und die auch eine Drehbeweglichkeit um eine in y-Richtung verlaufende Drehachse aufweist.

In Fig. 7 werden die Gelenke des Watt-Gestänges mit denselben Bezugszeichen wie in den Fig. 5 und 6 bezeichnet, obwohl das erste, zweite, vierte und fünfte Gelenk anders ausgestaltet sein können, zum Beispiel als Scharnier mit zwei relativ zueinander beweglichen Scharnierteilen. Das Watt-Gestänge befindet sich in einer Bewegungsposition, in der das erste 53a und das dritte 53b Koppelelement mit ihren Längsachsen in vertikaler Richtung orientiert sind. Mit dem ersten Drehgelenk 54a und dem fünften Drehgelenk 54d der kinematischen Kette ist die in der Figur nicht dargestellte zweite Abstützung drehbeweglich verbunden. Mit dem dritten Drehgelenk 50 ist die Traverse 6 drehbeweglich verbunden.

In der in Fig. 8 gezeigten Drehposition des Watt-Gestänges sind die zweite Abstützung und damit das erste Drehgelenk 54a und das fünfte Drehgelenk 54d nach rechts in y-Richtung verschoben, wie es durch zwei nach rechts weisende Pfeile dargestellt ist. Dadurch sind die Drehstellungen sämtlicher fünf Drehgelenke, 50, 54 verändert. Allerdings ist die Drehstellung des dritten Drehgelenks 50 aufgrund der Art und der Dimensionierung des Watt-Gestänges nur sehr geringfügig verändert. Auch die Höhenposition des dritten Drehgelenks 50 und damit auch der Traverse 6 sind nur sehr geringfügig verändert.

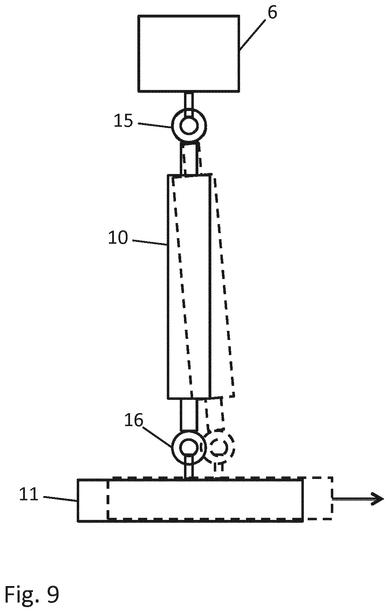

Fig. 9 zeigt in Seitenansicht eine Teil-Anordnung ähnlich der in Fig. 3. Die Traverse 6 oben in der Figur ist über ein oberes Drehgelenk 15 drehbeweglich mit der zweiten Abstützung 10 verbunden, welche wiederum über ein unteres Drehgelenk 16 drehbeweglich mit dem Schlitten 11 verbunden ist. Wenn, wie durch einen nach rechts weisenden Pfeil dargestellt, der Schlitten 11 nach rechts in y-Richtung oder (in einer anderen Ausgestaltung) in x-Richtung relativ zu der Traverse 6 versetzt ist, sind die Drehstellungen der Drehgelenk 15,16 entsprechend verändert und sind der Schlitten 11 und die Traverse 6 in z-Richtung (die vertikale Richtung in der Bildebene) näher aneinander positioniert als zuvor.

## Patentansprüche

1. Koordinatenmessgerät (20; 40) mit einer beweglichen Traverse (6), an der ein weiteres bewegliches Teil (7) des Koordinatenmessgeräts (20; 40) beweglich geführt ist, wobei
• an dem weiteren beweglichen Teil (7) ein Messsensor (9) zum Messen von Koordinaten eines Werkstücks befestigt ist oder befestigbar ist,
• die Traverse (6) über eine erste Abstützung (2) und eine von der ersten Abstützung (2) beabstandete zweite Abstützung (10; 19) an einer Basis (4) des Koordinatenmessgeräts abgestützt ist,
• die Traverse (6) relativ zu der Basis (4) in einer linearen Bewegungsrichtung linearbeweglich ist,
• die zweite Abstützung (10; 19) ein Drehgelenk (15; 50) aufweist, das eine Drehung um eine quer zur linearen Bewegungsrichtung verlaufende Drehachse ermöglicht, so dass bei einer Drehung um die Drehachse ein erster Teil (33) des Drehgelenks (15; 50), der mit der Traverse (6) verbunden ist, relativ zu einem zweiten Teil (31) des Drehgelenks (15; 50) bewegt wird und der zweite Teil (31) des Drehgelenks (15) und/oder ein mit dem zweiten Teil (31) des Drehgelenks (15; 50) verbundener Teil (53) der zweiten Abstützung (19) dabei auch in der linearen Bewegungsrichtung relativ zu dem ersten Teil (33) bewegt wird,
• ein in der linearen Bewegungsrichtung beweglich gelagerter Teil (11; 41) der zweiten Abstützung (10; 19), der ein beweglich mit dem zweiten Teil (31) des Drehgelenks (15; 50) verbundener Teil (11; 41) der zweiten Abstützung (10; 19) ist, durch ein Bewegungslager relativ zu der Basis (4) in der linearen Bewegungsrichtung beweglich gelagert ist, **dadurch gekennzeichnet, dass**
• der erste Teil (33) des Drehgelenks (15; 50) fest mit der Traverse (6) verbunden ist,
• das Drehgelenk (15) ein erstes Drehgelenk ist und der in der linearen Bewegungsrichtung beweglich gelagerte Teil (11; 41) der zweiten Abstützung (10) über ein zweites Drehgelenk (16), das eine Drehbewegung um eine zweite quer zur linearen Bewegungsrichtung verlaufende Drehachse ermöglicht, drehbeweglich mit dem zweiten Teil (31) des ersten Drehgelenks (15) verbunden ist.

2. Koordinatenmessgerät nach Anspruch 1, wobei der beweglich gelagerte Teil (11; 41) der zweiten Abstützung (10; 19) über eine mechanische Bewegungskopplung (13, 14, 24), die zusätzlich zu der Traverse (6) vorhanden ist, mit einem in der linearen Bewegungsrichtung relativ zu der Basis (4) beweglichen Teil der ersten Abstützung (2) gekoppelt ist.

3. Koordinatenmessgerät nach Anspruch 1 oder 2, wobei ein motorischer Antrieb mit der ersten Abstützung (2) gekoppelt ist, um eine Bewegung der Traverse (6) relativ zu der Basis (4) in der linearen Bewegungsrichtung anzutreiben.

4. Koordinatenmessgerät nach einem der Ansprüche 1-3, wobei das Drehgelenk (50) Bestandteil eines Watt-Gestänges (42) ist, über das der in der linearen Bewegungsrichtung beweglich gelagerte Teil (41) der zweiten Abstützung (19) beweglich mit der Traverse (6) gekoppelt ist.

5. Verfahren zum Herstellen eines Koordinatenmessgeräts, wobei
• eine Traverse (6) über eine erste Abstützung (2) und eine von der ersten Abstützung (2) beabstandete zweite Abstützung (10; 19) an einer Basis (4) des Koordinatenmessgeräts abgestützt wird,
• die Traverse (6) relativ zu der Basis (4) in einer linearen Bewegungsrichtung linearbeweglich ausgestaltet wird,
• ein weiteres bewegliches Teil des Koordinatenmessgeräts beweglich an der Traverse (6) geführt wird, wobei an dem weiteren beweglichen Teil ein Messsensor zum Messen von Koordinaten eines Werkstücks befestigt wird oder zur Befestigung vorgesehen wird,
• als Teil der zweiten Abstützung (10; 19) ein Drehgelenk (15; 50) montiert wird, das eine Drehung um eine quer zur linearen Bewegungsrichtung verlaufende Drehachse ermöglicht, so dass bei einer Drehung um die Drehachse ein erster Teil (33) des Drehgelenks (15), der mit der Traverse (6) verbunden ist, relativ zu einem zweiten Teil (31) des Drehgelenks (15) bewegt wird und der zweite Teil des Drehgelenks (15; 50) und/oder ein mit dem zweiten Teil (31) des Drehgelenks (15; 50) verbundener Teil (53) der zweiten Abstützung (19) dabei auch in der linearen Bewegungsrichtung relativ zu dem ersten Teil bewegt wird,
• ein in der linearen Bewegungsrichtung beweglich gelagerter Teil (11; 41) der zweiten Abstützung (10; 19), der ein beweglich mit dem zweiten Teil (31) des Drehgelenks (15; 50) verbundener Teil (11; 41) der zweiten Abstützung (10; 19) ist, durch ein Bewegungslager relativ zu der Basis (4) in der linearen Bewegungsrichtung beweglich gelagert wird,
**dadurch gekennzeichnet, dass**
• der erste Teil (33) des Drehgelenks (15; 50) fest mit der Traverse (6) verbunden wird,
• das Drehgelenk (15) ein erstes Drehgelenk ist und der in der linearen Bewegungsrichtung beweglich gelagerte Teil (11; 41) der zweiten Abstützung (10) über ein zweites Drehgelenk (16), das eine Drehbewegung um eine zweite quer zur linearen Bewegungsrichtung verlaufende Drehachse ermöglicht, drehbeweglich mit dem zweiten Teil (31) des ersten Drehgelenks (15) verbunden wird.

6. Verfahren nach Anspruch 5, wobei der beweglich gelagerte Teil (11; 41) der zweiten Abstützung (10; 19) über eine mechanische Bewegungskopplung, die zusätzlich zu der Traverse (6) vorgesehen wird, mit einem in der linearen Bewegungsrichtung relativ zu der Basis (4) beweglichen Teil (1) der ersten Abstützung (2) gekoppelt wird.

7. Verfahren nach Anspruch 5 oder 6, wobei ein motorischer Antrieb mit der ersten Abstützung (2) gekoppelt wird, um eine Bewegung der Traverse (6) relativ zu der Basis (4) in der linearen Bewegungsrichtung anzutreiben.

8. Verfahren nach einem der Ansprüche 5 bis 7, wobei das Drehgelenk (50) als Bestandteil eines Watt-Gestänges (42) montiert wird, über das der in der linearen Bewegungsrichtung beweglich gelagerte Teil (41) der zweiten Abstützung (19) beweglich mit der Traverse (6) gekoppelt wird.

## Claims

1. Coordinate measuring machine (20; 40) comprising a movable cross-beam (6), on which a further movable part (7) of the coordinate measuring machine (20; 40) is movably guided, wherein
• a measuring sensor (9) for measuring coordinates of a workpiece is or can be fixed to the further movable part (7),
• the cross-beam (6) is supported on a base (4) of the coordinate measuring machine via a first support (2) and a second support (10; 19) spaced apart from the first support (2),
• the cross-beam (6) can be moved linearly relative to the base (4) in a linear direction of movement,
• the second support (10; 19) has a rotary joint (15; 50), which permits a rotation about an axis of rotation extending transversely with respect to the linear direction of movement, so that, during a rotation about the axis of rotation, a first part (33) of the rotary joint (15; 50), which is connected to the cross-beam (6), is moved relative to a second part (31) of the rotary joint (15; 50), and the second part (31) of the rotary joint (15) and/or a part (53) of the second support (19) that is connected to the second part (31) of the rotary joint (15; 50) is also moved relative to the first part (33) in the linear direction of movement in this case,
• a part (11; 41) of the second support (10; 19), which is mounted such that it can be moved in the linear direction of movement and which is a part (11; 41) of the second support (10; 19) that is movably connected to the second part (31) of the rotary joint (15; 50), is mounted by a movement bearing such that it can be moved relative to the base (4) in the linear direction of movement,
**characterized in that**
• the first part (33) of the rotary joint (15; 50) is firmly connected to the cross-beam (6),
• the rotary joint (15) is a first rotary joint, and the part (11; 41) of the second support (10) that is mounted such that it can be moved in the linear direction of movement is rotatably connected to the second part (31) of the first rotary joint (15) via a second rotary joint (16), which permits a rotary movement about an axis of rotation extending transversely with respect to the linear direction of movement.

2. Coordinate measuring machine according to Claim 1, wherein the movably mounted part (11; 41) of the second support (10; 19) is coupled via a mechanical movement coupling (13, 14, 24), which is present in addition to the cross-beam (6), to a part of the first support (2) that can be moved relative to the base (4) in the linear direction of movement.

3. Coordinate measuring machine according to Claim 1 or 2, wherein a motor drive is coupled to the first support (2) in order to drive a movement of the cross-beam (6) relative to the base (4) in the linear direction of movement.

4. Coordinate measuring machine according to one of Claims 1-3, wherein the rotary joint (50) is part of a Watt linkage (42) via which the part (41) of the second support (19) that is mounted such that it can be moved in the linear direction of movement is movably coupled to the cross-beam (6).

5. Method for producing a coordinate measuring machine, wherein
• a cross-beam (6) is supported on a base (4) of the coordinate measuring machine via a first support (2) and a second support (10; 19) spaced apart from the first support (2),
• the cross-beam (6) is configured such that it can be moved linearly relative to the base (4) in a linear direction of movement,
• a further movable part of the coordinate measuring machine is movably guided on the cross-beam (6), a measuring sensor for measuring coordinates of a workpiece being fixed or provided to be fixed to the further movable part,
• a rotary joint (15; 50) is mounted as part of the second support (10; 19), which permits a rotation about an axis of rotation extending transversely with respect to the linear direction of movement, so that during a rotation about the axis of rotation, a first part (33) of the rotary joint (15), which is connected to the cross-beam (6), is moved relative to a second part (31) of the rotary joint (15), and the second part of the rotary joint (15; 50) and/or a part (53) of the second support (19) that is connected to the second part (31) of the rotary joint (15; 50) is also moved relative to the first part in the linear direction of movement in this case,
• a part (11; 41) of the second support (10; 19), which is mounted such that it can be moved in the linear direction of movement and which is a part (11; 41) of the second support (10; 19) that is movably connected to the second part (31) of the rotary joint (15; 50), is mounted by a movement bearing such that it can be moved relative to the base (4) in the linear direction of movement,
**characterized in that**
• the first part (33) of the rotary joint (15; 50) is firmly connected to the cross-beam (6),
• the rotary joint (15) is a first rotary joint, and the part (11; 41) of the second support (10) that is mounted such that it can be moved in the linear direction of movement is rotatably connected to the second part (31) of the first rotary joint (15) via a second rotary joint (16), which permits a rotary movement about an axis of rotation extending transversely with respect to the linear direction of movement.

6. Method according to Claim 5, wherein the movably mounted part (11; 41) of the second support (10; 19) is coupled via a mechanical movement coupling, which is present in addition to the cross-beam (6), to a part (1) of the first support (2) that can be moved relative to the base (4) in the linear direction of movement.

7. Method according to Claim 5 or 6, wherein a motor drive is coupled to the first support (2) in order to drive a movement of the cross-beam (6) relative to the base (4) in the linear direction of movement.

8. Method according to one of Claims 5 to 7, wherein the rotary joint (50) is mounted as part of a Watt linkage (42) via which the part (41) of the second support (19) that is mounted such that it can be moved in the linear direction of movement is movably coupled to the cross-beam (6).

## Revendications

1. Appareil de mesure de coordonnées (20 ; 40) comprenant une traverse mobile (6), sur laquelle est guidée de manière mobile une pièce mobile (7) supplémentaire de l'appareil de mesure de coordonnées (20 ; 40),
• sur la pièce mobile (7) supplémentaire étant ou pouvant être fixé un capteur de mesure (9) destiné à mesurer des coordonnées d'une pièce à usiner,
• la traverse (6) étant soutenue par l'intermédiaire d'un appui (2) et d'un deuxième appui (10 ; 19) écarté du premier appui (2) sur une base (4) de l'appareil de mesure de coordonnées,
• la traverse (6) étant linéairement mobile par rapport à la base (4) dans une direction de déplacement linéaire,
• le deuxième appui (10 ; 19) comportant une articulation rotative (15 ; 50) qui permet une rotation autour d'un axe de rotation s'écoulant à la transversale de la direction de déplacement linéaire, de telle sorte que lors d'une rotation autour de l'axe de rotation, une première partie (33) de l'articulation rotative (15 ; 50) qui est reliée avec la traverse (6) soit déplacée par rapport à la deuxième partie (31) de l'articulation rotative (15 ; 50) et qu'à cet effet, la deuxième partie (31) de l'articulation rotative (15) et/ou une partie (53) du deuxième appui (19) reliée avec la deuxième partie (31) de l'articulation rotative (15 ; 50) soit également déplacée dans la direction de déplacement linéaire par rapport à la première partie (33),
• une partie (11 ; 41) logée de manière mobile dans la direction de déplacement linéaire du deuxième appui (10 ; 19), qui est une partie (11 ; 41) du deuxième appui (10 ; 19), reliée de manière mobile avec la deuxième partie (31) de l'articulation rotative (15 ; 50) étant logée de manière mobile par l'intermédiaire d'un palier de déplacement par rapport à la base (4), dans la direction de déplacement linéaire,
**caractérisé en ce que**
• la première partie (33) de l'articulation rotative (15 ; 50) est reliée fixement avec la traverse (6),
• l'articulation rotative (15) est une première articulation rotative et la partie (11 ; 41) du deuxième appui (10) logée de manière mobile dans la direction de déplacement linéaire est reliée de manière mobile en rotation, par l'intermédiaire d'une deuxième articulation rotative (16) qui permet un déplacement en rotation autour d'un deuxième axe de rotation s'écoulant à la transversale de la direction de déplacement linéaire, avec la deuxième partie (31) de la première articulation rotative (15) .

2. Appareil de mesure de coordonnées selon la revendication 1, la partie (11 ; 41) logée de manière mobile du deuxième appui (10 ; 19) étant accouplée de manière mobile par l'intermédiaire d'un accouplement en déplacement mécanique (13, 14, 24), qui est présent en sus de la traverse (6) avec une partie du premier appui (2) mobile dans la direction de déplacement linéaire, par rapport à la base (4).

3. Appareil de mesure de coordonnées selon la revendication 1 ou 2, un entraînement motorisé étant accouplé avec le premier appui (2) pour entraîner un déplacement de la traverse (6) par rapport à la base (4) dans la direction de déplacement linéaire.

4. Appareil de mesure de coordonnées selon l'une quelconque des revendications 1 à 3, l'articulation rotative (50) étant une partie intégrante d'un parallélogramme de Watt (42) par l'intermédiaire duquel la partie (41) logée de manière mobile dans la direction de déplacement linéaire du deuxième appui (19) est accouplée de manière mobile avec la traverse (6).

5. Procédé, destiné à fabriquer un appareil de mesure de coordonnées,
• lors duquel on soutient une première traverse (6) par l'intermédiaire d'un premier appui (2) et d'un deuxième appui (10 ; 19) écarté du premier appui (2) sur une base (4) de l'appareil de mesure de coordonnées,
• on conçoit la traverse (6) de manière linéairement mobile par rapport à la base (4) dans une direction de déplacement linéaire,
• on guide une pièce mobile supplémentaire de l'appareil de mesure de coordonnées de manière mobile sur la traverse (6), sur la partie mobile supplémentaire, un capteur de mesure destiné à mesurer des coordonnées d'une pièce à usiner étant fixé ou prévu pour la fixation,
• en tant que partie du deuxième appui (10 ; 19), on monte une articulation rotative (15 ; 50) qui permet un rotation autour d'un axe de rotation s'écoulant à la transversale de la direction de déplacement linéaire de telle sorte que lors d'une rotation autour de l'axe de rotation, une première partie (33) de l'articulation rotative (15) qui est reliée avec la traverse (6) soit déplacée par rapport à une deuxième partie (31) de l'articulation rotative (15) et la deuxième partie de l'articulation rotative (15 ; 50) et/ou une partie (53) du deuxième appui (19) reliée avec la deuxième partie (31) de l'articulation rotative (15 ; 50) soit également déplacée à cet effet dans la direction de déplacement linéaire, par rapport à la première partie,
• on loge de manière mobile par rapport à la base (4) in der direction de déplacement linéaire via un palier de déplacement une partie (11 ; 41) du deuxième appui (10 ; 19), logée de manière mobile dans la direction de déplacement linéaire qui est une partie (11 ; 41) du deuxième appui (10 ; 19) reliée de manière mobile avec la deuxième partie (31) de l'articulation rotative (15 ; 50),
**caractérisé**
• **en ce qu'**on relie fixement la première partie (33) de l'articulation rotative (15 ; 50) avec la traverse (6),
• **en ce que** l'articulation rotative (15) est une première articulation rotative et par l'intermédiaire d'une deuxième articulation rotative (16) qui permet un déplacement en rotation autour d'un deuxième axe de rotation s'écoulant à la transversale de la direction de déplacement linéaire, on relie de manière mobile en rotation la partie (11 ; 41) du deuxième appui (10) logée de manière mobile dans la direction de déplacement linéaire avec la deuxième partie (31) de la première articulation rotative (15).

6. Procédé selon la revendication 5, la partie (11 ; 41) du deuxième appui (10 ; 19) logée de manière mobile étant accouplée par l'intermédiaire d'un accouplement en déplacement mécanique, qui est prévu en sus de la traverse (6), avec une partie (1) du premier appui (2) mobile dans la direction de déplacement linéaire par rapport à la base (4).

7. Procédé selon la revendication 5 ou 6, un entraînement motorisé étant accouplé avec le premier appui (2) pour entraîner un déplacement de la traverse (6) par rapport à la base (4) dans la direction de déplacement linéaire.

8. Procédé selon l'une quelconque des revendications 5 à 7, l'articulation rotative (50) étant montée en tant que partie intégrante d'un parallélogramme de Watt (42) par l'intermédiaire duquel on accouple de manière mobile avec la traverse (6) la partie (41) du deuxième appui (19) logée de manière mobile dans la direction de déplacement linéaire.
